# EUROPEAN PATENT SPECIFICATION

(11) **EP 1 549 991 B1**
(45) Date of publication and mention of the grant of the patent: **04.07.2007**
(21) Application number: 03732687.3
(22) Date of filing: 04.06.2003
(51) Int. Cl.: G02B 26/00, G02B 21/00

(54) **SPECTRAL DISCRIMINATION APPARATUS AND METHOD**
APPARAT UND VERFAHREN ZUR SPEKTRALEN UNTERSCHEIDUNG
APPAREIL ET PROCEDE DE DISCRIMINATION SPECTRALE

(30) Priority: 11.09.2002 GB 0221014
(43) Date of publication of application: 06.07.2005
(73) Proprietor: MEDICAL RESEARCH COUNCIL, London W1B 1AL (GB)
(72) Inventor: AMOS, Bradshaw William, London W1B 1AL (US); NOUI, Louahab, Bedfordshire LU3 1UL (GB)
(74) Representative: Forsyth, Helen Jane
(86) International application number: PCT/GB2003/002437
(87) International publication number: WO 2004/025351

(56) References cited:
- DE-A- 19 902 625
- US-A- 3 922 092
- US-A- 5 192 980
- US-A- 5 886 784
- US-A1- 2002 021 440
- US-A1- 2002 109 079
- PATENT ABSTRACTS OF JAPAN vol. 010, no. 278 (P-499), 20 September 1986 (1986-09-20) & JP 61 100620 A (UNION GIKEN:KK), 19 May 1986 (1986-05-19)

## Description

### Field of the Invention

This invention relates to spectral discrimination apparatus in confocal scanning optical microscopes.

### Background to the Invention

Several types of scanning optical microscope are now used. These include the confocal microscope and the multiphoton-excitation fluorescence microscope. In many such microscopes the illumination is confined to a spot of light which is scanned over the specimen, or alternatively the specimen is scanned relative to a stationary spot. The invention described here is applicable to all those forms of scanning optical microscope in which only a single spot is scanned.

A part of the established art of optical microscopy is the use of a series of lenses or other focussing means by which the specimen is focussed into a so-called intermediate image plane. This plane is one of a family of optically conjugate planes: as well as the aforementioned intermediate image plane the family includes the plane of focus within the specimen and the plane of the illumination iris and, in the case of systems with cameras, the plane of the photosensitive surface. This family of conjugate planes is known as the family of *image planes.* It is taught in elementary textbooks of microscopy that the aforementioned image planes alternate along the axis of a microscope with so-called *aperture planes,* in which the physical apertures of the lenses, or their back focal planes, are contained or imaged. Thus the family of aperture planes contains the condenser iris, the back focal plane of the objective lens and the Ramsden disc, (a small disc-shaped image of the back focal plane of the objective lens situated generally above the eyepiece and conjugate with the condenser iris). The terms "image plane" and "aperture plane" are introduced here because they are useful in understanding both the prior art and the present invention.

White, in US Patent 5 032 720, taught the use of a variable iris, controlling the passage of light to the detector in a confocal microscope. The iris is placed in an image plane such that the iris is optically conjugate with the focussed spot of light in the specimen. The iris diaphragm is, in the above terminology, an image plane stop. This image plane stop has the function of blocking light from regions of the specimen that lie outside the focussed spot. With such a stop, the scanning microscope functions as a confocal microscope. White also taught the division of the emitted light coming from the specimen in a confocal microscope into more than one beam according to wavelength, with this division being effected by chromatic reflectors. This design has proved to have many applications, chiefly in the simultaneous imaging of a plurality of fluorescent stains of different fluorescence emission colours in the same specimen.

Brakenhoff, in a diagram published on page 189 of Confocal Microscopy, edited by T. Wilson, Academic Press 1990, showed how a spectrometer could be used in conjunction with a scanning confocal microscope as a substitute for the chromatic reflectors of White. The advantage of this is that the wavelength of light passing to the detector can be selected from a continuous range. It is obvious to those skilled in the art of optics that the entry aperture to the spectrometer must be placed in an aperture plane as defined above. Only in this way can the spectrometric discrimination of colours in the emitted light be applied equally to all points in the image plane.

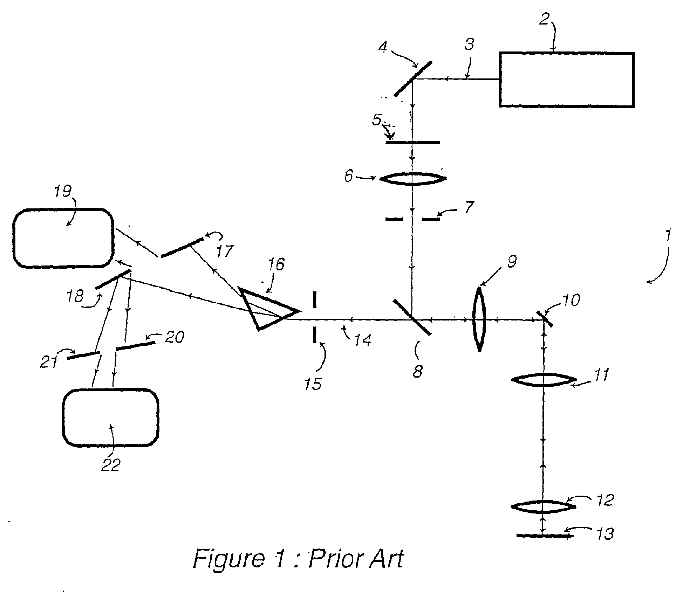

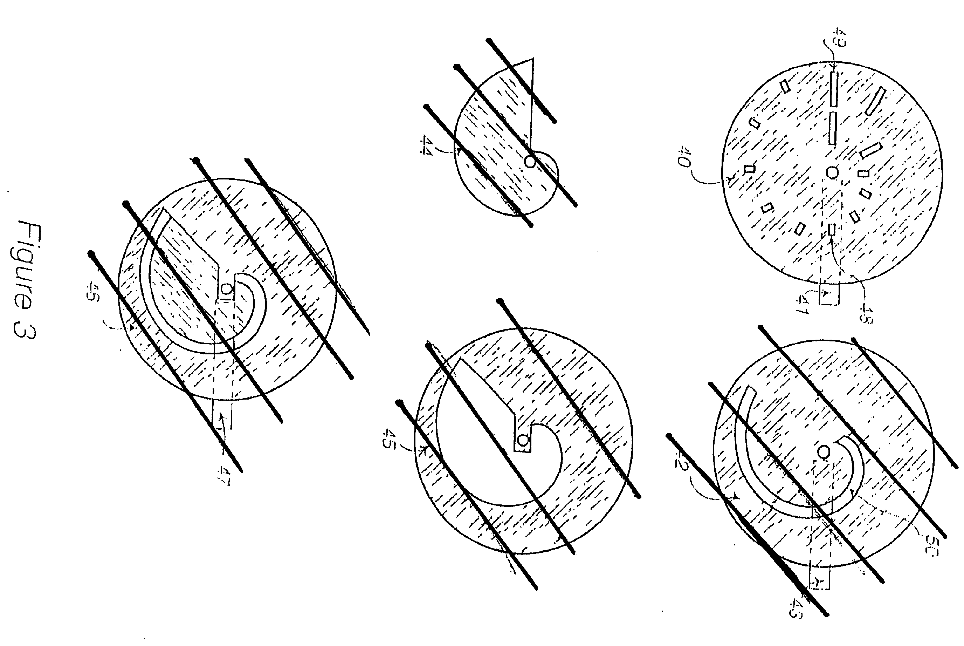

To the knowledge of the applicants, the closest prior art to the current invention is probably that of Engelhardt (US Patent 5,886,784) in which a spectrometer is described "of a form suitable for confocal fluorescence microscopy". This spectrometer is shown in Figure 1 of the accompanying drawings as Prior Art to the current invention. Figure 1 is derived from a combination of Figures 1 and 3 of Engelhardt's US Patent.

With reference to Figure 1 of the accompanying drawings, a confocal microscope 1 comprises a laser 2 which emits a beam of light 3 which is reflected by a reflector 4 and so passes through a filter 5 and a lens 6 which focusses the beam on an aperture or diaphragm 7. The beam passes thence to a chromatic beamsplitter 8 where a part of the beam is reflected through a lens 9 on to a scanning mirror 10. From the scanning mirror 10, the beam passes into an eyepiece lens 11 and an objective lens 12, being focussed by the objective lens on to a specimen 13. Light emitted from the specimen 13 passes back through the apparatus, retracing its original path, to the chromatic beamsplitter 8, where a part of the beam is focussed by lens 9 along path 14 on to a second aperture 15. Engelhardt referred to this microscope as a confocal microscope and, for this to be true, the apertures in the diaphragms 7 and 15 must each be confocal with the spot of light on the specimen 13 and from the discussion above it is clear that both must lie in conjugate image planes.

Engelhardt's invention is shown in the parts of Figure 1 that lie to the left of the diaphragm 15. It consists of a spectrometer which takes the form of a dispersive optical component such as a prism or grating, into which the beam of light (which has already passed through the confocal aperture at 15) passes and is dispersed into a fan of differently-coloured beams which are separated by a mask 17 and a reflector 18 into portions, one portion passing to detector 19 and another portion corresponding to a different range of wavelengths passing to a different detector at 22. Numerals 20 and 21 in Figure 1 indicate opaque screens which can be translated linearly to block more or less of the spectrally-dispersed beam passing to detector 22. Although Engelhardt is silent on this point, it is obvious to those skilled in the art that for any and all wavelengths the masks must lie in or close to an aperture plane or its equivalent and certainly not in an image plane of the microscope. If this design principle were not followed, the spectral separation would be applied to some parts of the microscope image and differently to others. Also, enlargement of the confocal aperture would have a deleterious effect on the spectral resolution.

Engelhardt's invention works satisfactorily, but suffers from the following disadvantages. If a series of masks and baffles are used, as specified in his patent, they cannot all lie in the same aperture plane as required for ideal performance. Also, if, as he taught, the slits in the plural masks are variable both in width and position, a large number of independent linear actuators are needed, which are slow and expensive and introduce complexities of control and interpretation. The latter are particularly severe when the dispersive element is a glass prism, as in Engelhardt's preferred embodiment, in which case the dispersion angle is anomalous, obeying no simple physical law and characteristic of the glass type. This requires the application of computed correction to each motor position to compensate for anomalous dispersion. Finally, the use of plural detectors, though advantageous for the simultaneous detection of light of different wavelengths, militates against the production of a cheap or compact instrument.

The present invention aims to overcome these difficulties. It is applicable to all point-scanning confocal microscopes containing a telescope in the emission path. Such a telescope is a well-known part of the art of confocal microscopy.

### Summary of the Invention

According to the invention there is provided a confocal scanning optical microscope comprising a spectral discrimination apparatus including light dispersive means, frequency selective means positioned in an aperture plane after the dispersive means and a detector for receiving light from the frequency selective means, characterised in that:
- the microscope comprises a telescope the light beam from which passes to the dispersive means,
- the frequency selective means comprise a rotatable disc having two elongated light-transmitting slots positioned along a common radial line of the disc with the direction of elongation of each slot being aligned along the common radial line, the two slots allowing passage of light of two wavebands respectively, whereby the detector is operative to detect light in the two different wavebands.

Where a single rotatable member acts selectively to block or transmit light, the member is formed or shaped to provide the required blocking or transmission of light, and this is achieved by furnishing the rotatable member with opaque and transmissive regions, with the two light-transmitting apertures in an otherwise opaque rotatable member to control the passage of light past the rotatable member.

The rotatable member can be continuously rotated (for example at high speed to facilitate switching between lines in raster scanning) or rotated in a step-wise fashion between indexed positions. The rotation causes a particular waveband or wavebands of light to be transmitted and this waveband may vary with angular rotation or may be invariable.

In the invention, the microscope is a confocal microscope equipped in its emission light path (corresponding to 14 in Figure 1) with a telescope. The telescope acts on the light coming from the specimen in such a way as to produce an aperture plane conjugate with the back focal plane of the objective lens and containing an image of the back focal plane of the objective much reduced in size. This image, which corresponds to an exit pupil of the telescope, serves as the entrance pupil for a spectrometer. The spectrometer receives light emanating from this image and disperses it according to wavelength by passage of the light through a prism, a diffraction grating or other dispersive means. Means (such as lenses) are also provided by which the light of each wavelength is brought to a focus. In the case that white light, consisting of a continuous series of wavelengths, enters the dispersing means, a rainbow-like streak is formed, containing an infinite series of images of the exit pupil of the telescope. The streak lies in an aperture plane conjugate with the other aperture planes in the microscope.

The frequency selection means, consisting in the simplest embodiment of a thin perforated disc, or an opaque disc with transparent regions, is positioned after the dispersive element and in the aperture plane containing the streak in such a way that the perforations control the admission of light of different wavelengths to the detector. Such discs can be produced very cheaply and controlled by a single cheap rotary motor or a small number of such motors, which can effect a switch of wavelength much more rapidly than the linear actuators of Engelhardt. The rotation of the disc to definite angular positions allows the wavelength of detection to be varied in steps. The disc can also be spun continuously to achieve high speeds of switching or subjected to an angular rotary vibration, so alternating rapidly between positions or scanning through a series of such positions.

The position, shape and size of the perforations in the disc are computed to allow correction for anomalous dispersion effects in glass prisms or to compensate for variation in detector sensitivity with wavelength. Perforations or other markers are optionally provided on the disc or discs or on devices mounted on the same axle or moving in coordination with the discs to allow the disc position to be determined electronically. Similar perforations or markers are optionally provided to serve to switch the incident light from a laser or lasers or other light sources in the confocal microscope.

### Brief Description of the Drawings

The invention will now be further described, by way of example, with reference to the accompanying drawings, in which:
**Figure 1**, already described, is illustrative of the prior art,
**Figure 2** shows a preferred embodiment of confocal microscope including a spectral discrimination apparatus according to the invention, and
**Figure 3** shows a rotatable member of the spectral discrimination apparatus of Figure 2.

### Detailed Description

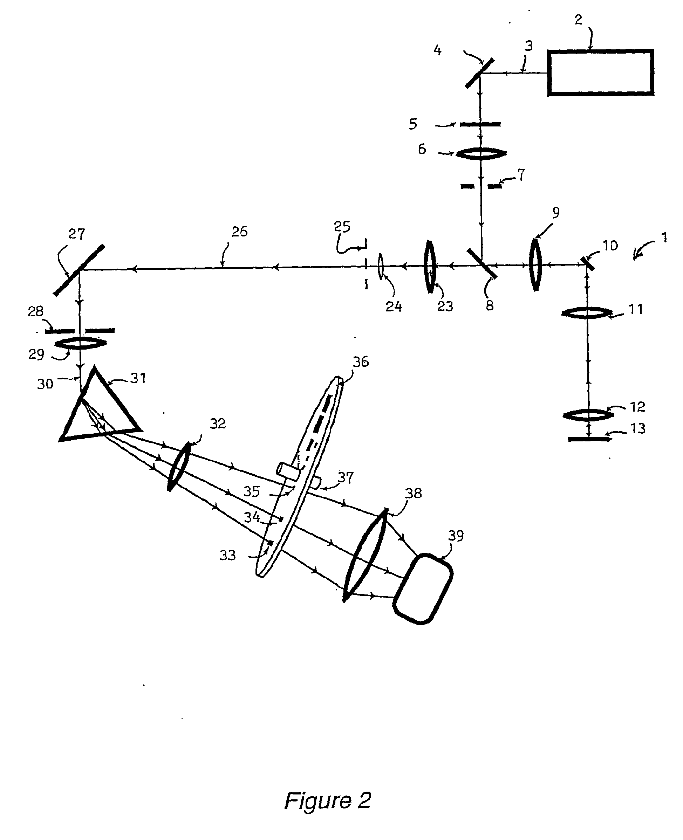

Referring to Figure 2, the spectral discrimination apparatus (shown by components referenced 31 to 37) is shown in a confocal microscope 1 having scanning components 2 to 13 corresponding to similarly numbered components in Figure 1. In Figure 2, light is shown entering a Keplerian telescope, consisting of lenses 23 and 24. The light entering lens 23 is equivalent to the light beam 14 of Figure 1: it consists of the light emitted by the specimen 13 in the scanning microscope 1. The telescope produces a focussed image of the back focal plane of the objective lens of the scanning microscope in a plane 25 which is, according to standard optical terminology, an aperture plane. The image of the back focal plane thus formed by the telescope is greatly reduced in size relative to the actual aperture size in the objective lens. Light beam 26 passes from this reduced-size image to a diaphragm 28, being deflected for convenience by a reflector 27. The diaphragm 28 is situated in an image plane where it can be closed down to provide a confocal aperture if the microscope is required to function as a confocal one. A portion of the light passes through the diaphragm 28 and enters a positive lens 29, which is separated from the plane 25 by its focal length. In accordance with the rules of geometrical optics, the beam 26 which spreads from the small image in the aperture plane 25 is rendered substantially parallel by the lens 29 and the light passes as a parallel beam 30 into a prism 31 or other dispersive means. The light of each individual wavelength continues as a parallel beam but at an angle to similar beams of other wavelengths. In Figure 2, light of three different wavelengths is shown passing into a positive lens 32 which focusses the parallel beams to respective foci at 33, 34 and 35. At each focus there is an image of the image in aperture plane 25. The images of these and other wavelengths lie in a relayed aperture plane in which is placed a selector disc 36 rotatable about a central axis defined by an axle 37. The selector disc 36 has opaque and transparent regions and by rotation on the axle 37 light of different wavelengths, corresponding to different radial distances on the disc 36, may be allowed to pass through the disc, or be blocked. The light that is allowed to pass through the disc 36 passes to a detector 39, being optionally concentrated by lens 38.

The selector disc 36 is shown in more detail in Figure 3 and referenced 40, where the opaque regions of the disc are shown by cross-hatching. Disc 40 is shown with 13 rectangular holes, but the number is arbitrary. The disc 40 is shown overlapping an elongated rectangular region 41, corresponding to the streak of dispersed images such as 33, 34 and 35 of Figure 2. With the disc 40 in the position shown relative to the streak of illumination at 41, only wavelengths in one short band are allowed to pass to the detector 39, via the slot 48. By rotation of the disc about the central circle, with indicates the axis of rotation defined by the axle 37, different slots are brought into the illuminated field. As is indicated in the drawing of disc 40, the slots can be positioned on a spiral to allow a succession of ascending or descending wavelengths to be admitted for detection. The radial extent of each slot determines the width of the optical passband. The precise shape of the spiral is optionally chosen so that equal angular shifts of the disc give equal shifts of the centre of the passband in terms of wavelength. This allows the disc to compensate for the non-linear dispersion of the glass of the prism 31. The slot width in the radial direction is chosen to compensate for variation in spectral sensitivity of the detector according to wavelength. As shown at 49 on disc 40, two elongated rectangular slots are placed on a single radial line, to allow detection in two different wavebands. The direction of elongation of the slots 49 is aligned with a common radial line of the disc 40, and the aggregate length of the two slots 49 along the radial line represents the major part of the length of the radial line along which the slots lie. The thin bridge of opaque material between the two slots 49 provides for blockage of one very restricted range of wavelengths, such as that of a laser, which is of particular advantage in fluorescence and other modes of microscopy in which an intense laser source is used, but the emitted signal at a nearby wavelength is weak.

Also disclosed are discs, or elements mechanically linked to the discs, which bear slots or markers (including electronic sensors such as Hall effect sensors) with functions other than the selection of detected wavebands. These include simple perforations to identify a home position of the disc (e.g. by means of a slotted opto-switch), or encoder regions to allow an unambiguous readout of disc position or slots or markers allowing direct shuttering or indirect switching of illumination for the microscope. For example, the same disc that controls the detection wavelength may switch to an appropriate laser from a choice of several lasers, simultaneously with switching detection waveband.

Also disclosed are discs in which the transmissive regions have optical filter properties, either incorporated into the material of the disc or attached thereto and rotating with the disc.

Also disclosed are a number of modes of operation. These include rotational movements of the disc to successive indexed positions, i.e. the successive presentation of different selector disc positions by rotational steps of fixed angular size, and the continuous rotation of the selector disc to facilitate more rapid switching of detection waveband, for example switching between lines in a raster scanning system. It is also envisaged that the disc may be rotated, either continuously or in distinct angular increments, in an angular oscillatory fashion, for example, to alternate repeatedly between two or more detection wavebands.

Also disclosed are microscope systems in which plural detectors are used, placed in the light path subsequent to the selector disc. This includes systems in which other means of chromatic separation are used in combination with the selector disc, for example means of chromatic separation can be placed before or after the selector disc, or even on the selector disc by using colour filters fixed or cemented to the surface of the disc.

## Claims

1. A confocal scanning optical microscope comprising a spectral discrimination apparatus including light dispersive means (31) and frequency selective means (36) positioned in an aperture plane after the dispersive means (31) and a detector (39) for receiving light from the frequency selective means (36), **characterised in that**:
- the microscope comprises a telescope (23, 24) the light beam (26) from which passes to the dispersive means (31),
- the frequency selective means (36) comprise a rotatable disc (40) having two elongated light-transmitting slots (49) positioned along a common radial line of the disc with the direction of elongation of each slot (49) being aligned along the common radial line, the two slots (49) allowing passage of light of two wavebands respectively, whereby the detector (39) is operative to detect light in the two different wavebands.

2. A confocal scanning optical microscope according to claim 1, **characterised in that** each slot (49) is rectangular in shape.

3. A confocal scanning optical microscope according to claim 2, **characterised in that** the aggregate length of the two slots (49) along the radial line represents the major part of the length of the radial line along which the two slots (49) lie.

4. A confocal scanning optical microscope according to any of the preceding claims, **characterised in that** the disc (40) has additional light-transmitting slots each positioned on a corresponding radial line of the disk.

## Patentansprüche

1. Optisches Mikroskop zum konfokalen Scannen, umfassend eine Vorrichtung zur spektralen Unterscheidung, umfassend ein Lichtstreuungsmittel (31) und ein Frequenzauswahlmittel (36), das in einer Aperturebene nach dem Streuungsmittel (31) angeordnet ist, sowie einen Detektor (39) zum Empfang von Licht von dem Frequenzauswahlmittel (36), **dadurch gekennzeichnet, dass**:
- das Mikroskop ein Teleskop (23, 24) umfasst, von dem der Lichtstrahl (26) zu dem Streuungsmittel (31) geht;
- das Frequenzauswahlmittel (36) eine drehbare Scheibe (40) umfasst, die zwei langgestreckte lichtdurchlässige Schlitze (49) aufweist, die entlang einer gemeinsamen Radiallinie der Scheibe angeordnet sind, wobei die Längsrichtung jedes Schlitzes (49) mit der gemeinsamen Radiallinie fluchtet und wobei die beiden Schlitze (49) Licht von jeweils zwei Wellenbändern durchlassen, wobei der Detektor (39) so wirkt, dass er Licht in den zwei verschiedenen Wellenbändern erfasst.

2. Optisches Mikroskop zum konfokalen Scannen nach Anspruch 1, **dadurch gekennzeichnet, dass** jeder Schlitz (49) eine rechteckige Form hat.

3. Optisches Mikroskop zum konfokalen Scannen nach Anspruch 2, **dadurch gekennzeichnet, dass** die Gesamtlänge der beiden Schlitze (49) entlang der Radiallinie den Großteil der Länge der Radiallinie, entlang derer die beiden Schlitze (49) liegen, darstellt.

4. Optisches Mikroskop zum konfokalen Scannen nach einem der vorigen Ansprüche, **dadurch gekennzeichnet, dass** die Scheibe (40) zusätzliche lichtdurchlässige Schlitze aufweist, die jeweils auf einer entsprechenden Radiallinie der Scheibe angeordnet sind.

## Revendications

1. Microscope optique à balayage confocal comprenant un appareil de discrimination spectrale comportant des moyens de dispersion de la lumière (31) et des moyens de sélection de fréquence (36) placés dans un plan d'ouverture après le moyen de dispersion (31) et un détecteur (39) pour recevoir de la lumière à partir du moyen de sélection de fréquence (36), **caractérisé en ce que** :
- le microscope comprend un télescope (23, 24) dont le faisceau de lumière (26) passe vers le moyen de dispersion (31),
- le moyen de sélection de fréquence (36) comprend un disque rotatif (40) ayant deux fentes de transmission de lumière allongées (49) placées le long d'une ligne radiale commune du disque, la direction d'allongement de chaque fente (49) étant alignée le long de la ligne radiale commune, les deux fentes (49) permettant le passage de lumière de deux bandes d'onde respectivement de sorte que le détecteur (39) est opérationnel pour détecter la lumière dans les deux bandes d'onde différentes.

2. Microscope optique à balayage confocal selon la revendication 1, **caractérisé en ce que** chaque fente (49) est de forme rectangulaire.

3. Microscope optique confocal à balayage selon la revendication 2, **caractérisé en ce que** la longueur totale des deux fentes (49) le long de la ligne radiale représente la partie principale de la longueur de la ligne radiale le long de laquelle les deux fentes (49) se trouvent.

4. Microscope optique confocal à balayage selon l'une quelconque des revendications précédentes, **caractérisé en ce que** le disque (40) a des fentes de transmission de lumière supplémentaires, chacune placée sur une ligne radiale correspondante du disque.
